# EUROPEAN PATENT SPECIFICATION

(11) **EP 1 478 457 B1**
(45) Date of publication and mention of the grant of the patent: **31.08.2011**
(21) Application number: 03711329.7
(22) Date of filing: 28.02.2003
(51) Int. Cl.: B01J 19/30, B01D 53/50

(54) **CERAMIC PACKING ELEMENT**
KERAMISCHER FÜLLKÖRPER
ELEMENT DE REMPLISSAGE CERAMIQUE

(30) Priority: 28.02.2002 US 87564; 01.05.2002 US 136478
(43) Date of publication of application: 24.11.2004
(73) Proprietor: Saint-Gobain Ceramics and Plastics, Inc., Worcester, MA 01615-0138 (US)
(72) Inventor: NIKNAFS, Hassan, S., Stow, OH 44224 (US); MILLER, Robert, L., Stow, OH 44224 (US)
(74) Representative: Leidescher, Thomas
(86) International application number: PCT/US2003/006263
(87) International publication number: WO 2003/074168

(56) References cited:
- EP-A- 0 055 535
- WO-A-99/29425
- US-A- 3 957 931
- US-A- 4 122 011
- US-A- 6 007 915

## Description

### Background of the Invention

This invention relates to packing elements of the type that are often called "random" or "dumped" packings. Such packings are used to fill towers units in which mass or heat transfer processes occur. A particularly important application is the use of such ceramic elements in heat recovery operations where it is necessary to provide maximum effective contact with hot fluids passing through the reactor. Another key factor in maximizing efficiency is the maintenance of as low a pressure difference between top and bottom of the tower as possible. To ensure this the packing elements should present the minimum resistance to flow. This is promoted by very open structures but open structure alone is of limited use if the elements in the tower nest together such that parts of one packing element penetrate within the space of a second element. It is therefore important that the design of the elements minimize the tendency of the elements to nest together.

The present invention relates particularly to ceramic packing elements that are produced by an extrusion or a dry-pressing process and hence have an essentially uniform cross-section along one axial direction which provides an axis of symmetry for the element. Several such shapes have been described in the art ranging from the very simple to the complex. All are based on an essentially cylindrical shape and differ basically in the internal structure within the cylindrical shape. The simplest structure is a basic cylinder with no internal structure at all. This type of structure is often called a Raschig ring and has been known for many years. At the other end of the complexity scale are the structures described in US Design Patent 455,029 and USP 6,007,915. Between the extremes there are simple wagon-wheel shapes such as are described in USPP 3,907,710 and 4,510,263 and polygonal structures as known from WO 99/29425 A.

Regrarding the dimensions of these shapes which are critical to achieving optimum performance and the range of dimensions for such optimum performance. USP 4, 510, 263 teaches L:D ratios of 0.5 to 5 but indicates that preferred ratios are from 0.5 to 2. In USP 3,907,710 there is no teaching on the aspect ratio but the Examples use elements with the ratio of 1. USP 4,337,178 which teaches cylindrical ceramic elements as catalyst supports, also does not teach specific preferred aspect ratios but utilizes in the Examples elements with aspect ratios of 2.11, whereas USP 6,007, 915 discloses in an example the ratio of the diameter to the length of 3.4.

### Summary of the Invention

In accordance with one aspect of the present invention, a ceramic packing element according to claim 1 is provided.

In one embodiment, the ratio of the diameter to the length may be from 3.0 to 4.4.

### Drawings

Figure 1 is a perspective view of a packing element not forming part of the invention from a point below and to one side, looking directly at one of the corners.
Figure 2 shows a top view of the same element as is shown in Figure 1.
Figure 3 is a graph of percentage thermal recovery against the aspect ratio of the elements
Figure 4 is a graph of the percentage thermal recovery against gas flow rate.
Figure 5 is a top view of an element with an axially located larger channel.

### Description of Preferred Embodiment

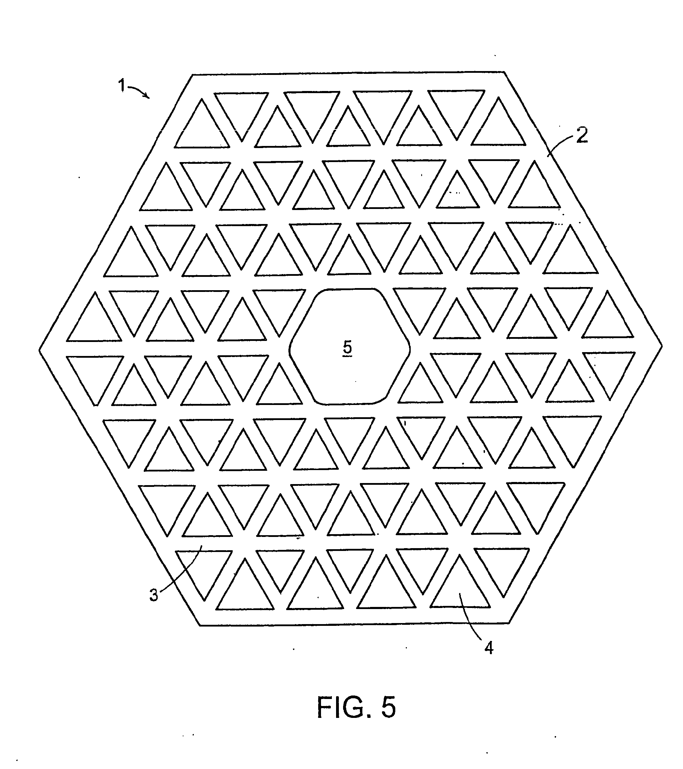

The invention is now more particularly described with reference to one embodiment illustrated in the Figure. 5

A ceramic packing element is defined as having a containing structure that is an essentially cylindrical structure having a polygonal cross-section having six sides. The space within the containing structure has a plurality of septa since a primary application is in the field of heat transfer in which surface area becomes very significant, and therefor internal structures are provided. In the context of this invention the term "septum" (plural "septa") is used to describe structural member connecting one interior part of the cylindrical containing structure with another. It therefore includes structures with lengths up to and including diameters.

The ceramic elements of the invention can be formed from any suitable ceramic material such natural or synthetic clays, zeolites, cordierites, aluminas, zirconia, silica or mixtures of these. The formulation can be mixed with bonding agents, extrusion aids, pore formers, lubricants and the like to assist in the extrusion process and/or to generate the desired porosity or surface area for the intended application.

The elements can be used in heat and mass transfer applications or as bases upon which catalytic components are deposited. The elements are particularly suitable for heat transfer applications involving heat recovery from streams of hot gases. An example of such an application is found in thermal regenerators attached to plants whose function is to burn off any combustible material from a waste gas stream. In such regenerators it is vital for efficient operation that the heat values from the exhaust gas stream be used to heat up the incoming waste gas to be treated so as to minimize the cost of fuel required to burn off the combustible material. The present invention teaches a way to optimize the element design to achieve this end.

Mass transfer applications include the transfer of mass in the form of one or more components between a fluid and the ceramic elements, such as the removal of gas components, such as sulfur dioxide, from a flowing gas stream. An important mass transfer application of the ceramic elements is in sulfuric acid plant absorbers.

The element has internal septa subdividing the space within the element into a plurality of channels and has an axially located aperture which is the result of removing septa separating some of the channels to form a larger combined channel.

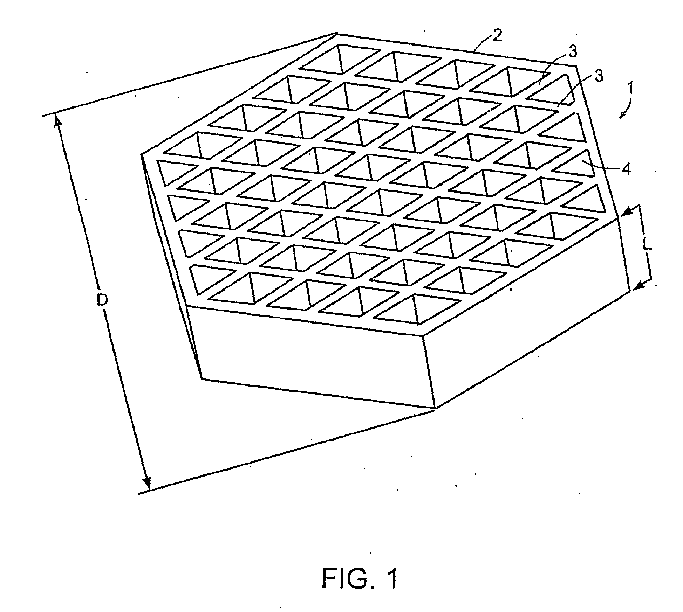

A known structure comprises a containing structure that is hexagonal with each pair of opposed corners connected by a septum and parallel septa on either side connect the sides meeting at those opposed corners. The overall effect is to provide a plurality of triangular passages through the element, each of essentially the same dimensions. Elements of this design are illustrated in Figures 1-2 of the Drawings.

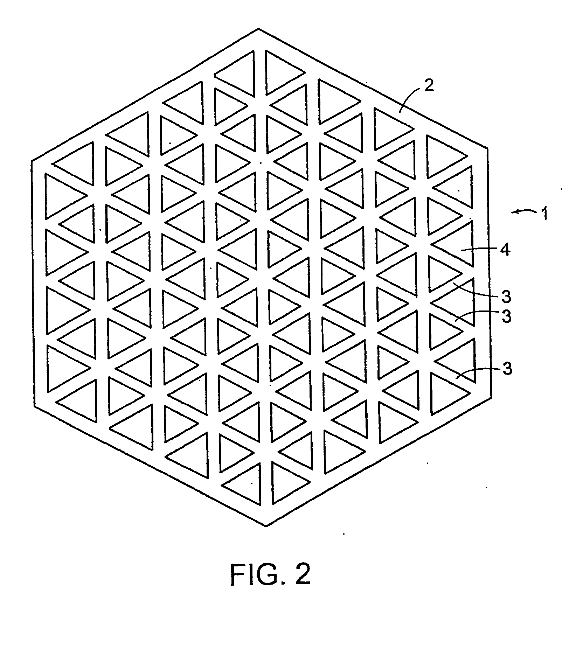

An element according to the invention with a larger axially located passage as illustrated in Figure 5. This element is based on the design of Figure 1 and 2 with six of the triangular passages around the axis combined to form the larger axially located passage, 5. The Drawing show a packing element, 1, with a hexagonal containing structure, 2. A plurality of septa, 3, divide the interior space into a plurality of identical triangular passages, 4, through the element. The element has a length L, along the axis of symmetry, and a greatest dimension D, perpendicular to the axis of symmetry. In the Drawings the ratio of D:L is about 4. The axis of symmetry may be in the direction of extrusion of the structure.

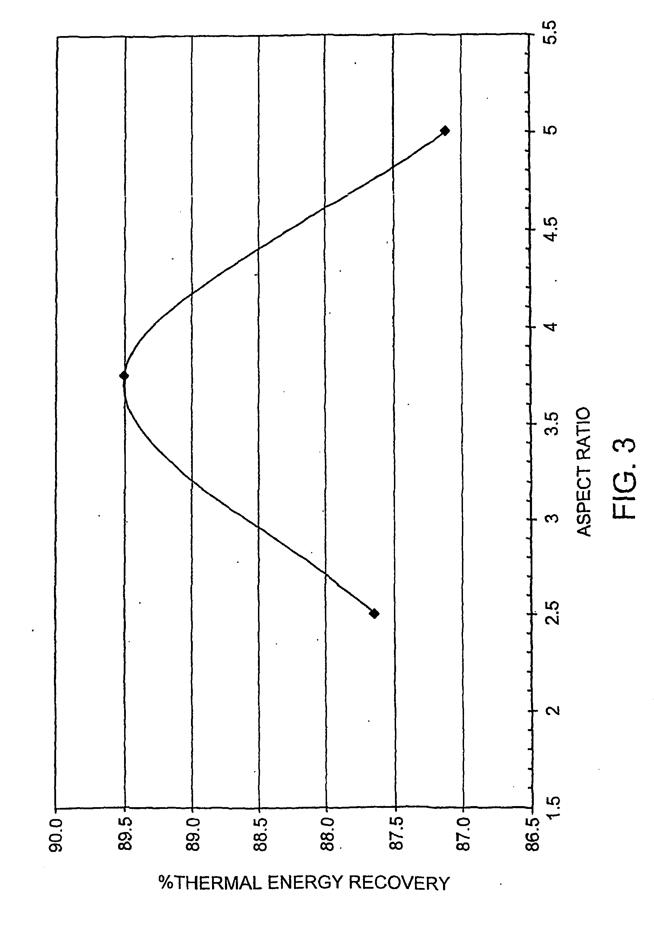

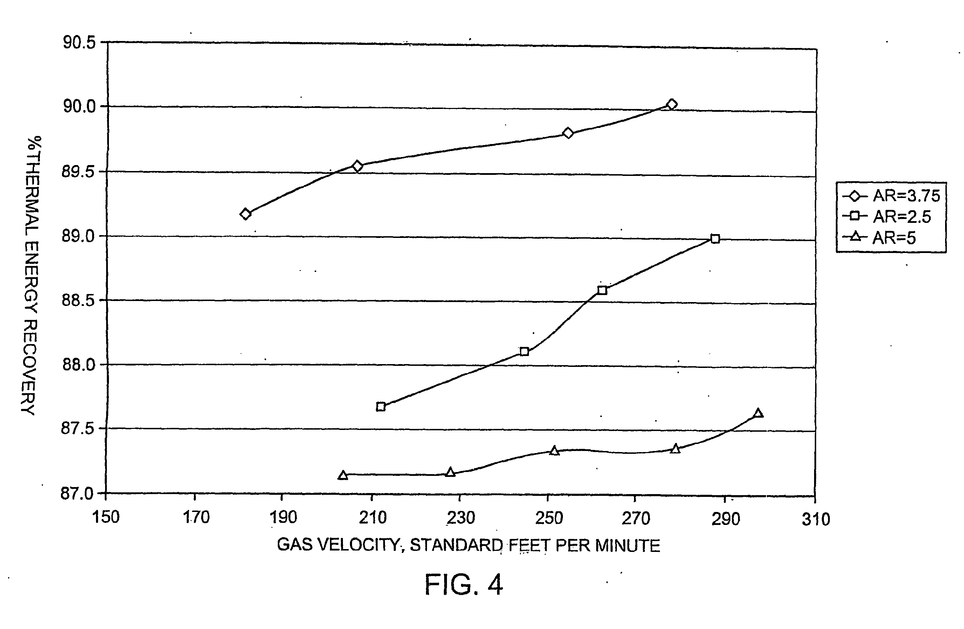

To demonstrate the significance of the D:L ratio, ceramic elements were prepared with the same D but with three different values of L. These elements were then placed in a tube through which a gas stream at 1500°F, (815.6°C), was passed at a rate of 207 ft/sec., (74.8 m/sec), and the percentage of the thermal energy in the stream recovered through the contact with the media was measured and plotted against the aspect ratio. The results are shown in Figure 3.
The percentage thermal energy recovery was then determined as a function of the gas velocity for each of the three elements. The results are shown in Figure 4. From these graphs it is very clear that there is a peak in percentage thermal energy recovery between about 2.7 and 4.5 aspect ratios and particularly between about 3.0 and 4.4 and that this advantage is maintained at all the gas flow rates tested.

The advantage of the D:L ratio are also found in mass transfer applications.

## Claims

1. A ceramic packing element (1) for heat and mass transfer applications **characterized by**:
An essentially cylindrical structure (2) with an axis of symmetry in a direction defining the length (L) of the element and a greatest dimension (D) perpendicular to the length defining the diameter of the element in which the ratio of the diameter to the length is from 2.7 to 4.5, the essentially cylindrical structure having a polygonal cross-section having six sides in which the element is provided with a plurality of internal septa (3) defining a plurality of identical passages (4) through the element each of which has a triangular cross-section, wherein the ceramic packing element (1) further comprises a larger axial passage (5) being provided by combining a plurality of the passages (4) created by the septa that surround the axis of symmetry, wherein the larger axial passage (5) has a volume which is at least twice that of the other passages (4).

2. The ceramic packing element (1) according to claim 1, further **characterized by**: the ratio of the diameter to the length being from 3.0 to 4.4.

3. The ceramic packing element (1) according to claim 1, further **characterized by**: the ratio of the diameter to the length being from 3.5 to 4.0.

4. The ceramic packing element (1) according to any one of the preceding claims 1 to 3, further **characterized by**: the cylindrical structure enclosing a plurality of septa (3) defining a plurality of passages (4) through the element each having essentially the same length.

5. The ceramic packing element (1) according to claim 4, further **characterized by**: there being at least twenty of the passages (4).

6. The ceramic packing element (1) according to claim 5, further **characterized by**: there being at least fifty of the passages (4).

7. The ceramic packing element (1) according to any one of preceding claims 4 to 7, further **characterized by**: a plurality of the septa (3) each intersecting at least two other septa (3) at spaced apart locations along a length of the septa (3).

8. The ceramic packing element (1) according to claim 1, further **characterized by**: the larger axial passage (5) having a volume which is at least four times that of the other passages (4).

9. The ceramic packing element (1) according to any one of the preceding claims 1 to 8, further **characterized by**: the ceramic being made from a material selected from the group consisting of natural clays, synthetic clays, aluminas, zeolites, cordierite, zirconia, silica, and mixtures thereof.

10. The ceramic packing element (1) according to any one of preceding claims 4 to 9, further **characterized by**: all of the septa (3) in the packing element (1) having first and second ends, the septa (3) being connected with the essentially cylindrical structure adjacent at least the first end.

11. A method of removing heat from a fluid stream, the method **characterized by**.
Flowing the fluid stream through a plurality of ceramic packing elements (1), the packing elements (1) absorbing heat from the fluid stream, each of the packing elements (1) comprising:
An essentially cylindrical structure (2) with an axis of symmetry in a direction defining the length (L) of the element and a greatest dimension (D) perpendicular to the length defining the diameter of the element in which the ratio of the diameter to the length is from 2.7 to 4.5, the essentially cylindrical structure having a polygonal cross-section having six sides in which the element is provided with a plurality of internal septa (3) defining a plurality of identical passages (4) through the element each of which has a triangular cross-section, wherein the ceramic packing element (1) further comprises a larger axial passage (5) being provided by a combining a plurality of the passages (4) created by the septa that surround the axis of symmetry, wherein the larger axial passage (5) has a volume which is at least twice that of the other passages (4).

12. A method of mass transfer **characterized by**.
Flowing the fluid stream through a plurality of ceramic packing elements (1), the packing elements (1) absorbing one or more components from the fluid stream, each of the packing elements (1) comprising:
An essentially cylindrical structure (2) with an axis of symmetry in a direction defining the length (L) of the element and a greatest dimension (D) perpendicular to the length defining the diameter of the element in which the ratio of the diameter to the length is from 2.7 to 4.5, the essentially cylindrical structure having a polygonal cross-section having six sides in which the element is provided with a plurality of internal septa (3) defining a plurality of identical passages (4) through the element each of which has a triangular cross-section, wherein the ceramic packing element (1) further comprises a larger axial passage (5) being provided by a combining a plurality of the passages (4) created by the septa that surround the axis of symmetry, wherein the larger axial passage (5) has a volume which is at least twice that of the other passages (4).

13. The method of mass transfer according to claim 12, further **characterized by**:
The component including sulfur dioxide.

## Patentansprüche

1. Keramischer Füllkörper (1) für Wärme- und Stoffaustausch-Anwendungen, **gekennzeichnet durch**
eine im Wesentlichen zylindrische Struktur (2) mit einer Symmetrieachse in einer Richtung, welche die Länge (L) des Füllkörpers definiert, und einer zu der Länge senkrechten größten Abmessung (D), welche den Durchmesser des Füllkörpers definiert, wobei das Verhältnis des Durchmessers zur Länge im Bereich von 2,7 bis 4,5 liegt, wobei die im Wesentlichen zylindrische Struktur einen polygonalen Querschnitt mit sechs Seiten aufweist, wobei der Füllkörper mit mehreren inneren Trennwänden (3) versehen ist, die mehrere identische Durchlässe (4) **durch** den Füllkörper definieren, von denen jeder einen dreieckigen Querschnitt aufweist, wobei der keramische Füllkörper (1) ferner einen größeren axialen Durchlass (5) aufweist, der **durch** Kombinieren mehrerer der Durchlässe (4) vorgesehen ist, die von den Trennwänden erzeugt werden, welche die Symmetrieachse umgeben, wobei der größere axiale Durchlass (5) ein Volumen aufweist, welches mindestens doppelt so groß wie das der anderen Durchlässe (4) ist.

2. Keramischer Füllkörper (1) nach Anspruch 1, ferner **dadurch gekennzeichnet, dass** das Verhältnis des Durchmessers zur Länge im Bereich von 3,0 bis 4,4 liegt.

3. Keramischer Füllkörper (1) nach Anspruch 1, ferner **dadurch gekennzeichnet, dass** das Verhältnis des Durchmessers zur Länge im Bereich von 3,5 bis 4,0 liegt.

4. Keramischer Füllkörper (1) nach einem der Ansprüche 1 bis 3, ferner **dadurch gekennzeichnet, dass** die zylindrische Struktur mehrere Trennwände (3) umschließt, die mehrere Durchlässe (4) durch den Füllkörper definieren, die alle im Wesentlichen dieselbe Länge haben.

5. Keramischer Füllkörper (1) nach Anspruch 4, ferner **dadurch gekennzeichnet, dass** mindestens zwanzig der Durchlässe (4) vorhanden sind.

6. Keramischer Füllkörper (1) nach Anspruch 5, ferner **dadurch gekennzeichnet, dass** mindestens fünfzig der Durchlässe (4) vorhanden sind.

7. Keramischer Füllkörper (1) nach einem der vorhergehenden Ansprüche 4 bis 7, ferner **dadurch gekennzeichnet, dass** mehrere der Trennwände (3) mindestens zwei andere Trennwände (3) an voneinander beabstandeten Stellen entlang einer Länge der Trennwand (3) kreuzen.

8. Keramischer Füllkörper (1) nach Anspruch 1, ferner **dadurch gekennzeichnet, dass** der größere axiale Durchlass (5) ein Volumen aufweist, welches mindestens viermal so groß wie das der anderen Durchlässe (4) ist.

9. Keramischer Füllkörper (1) nach einem der vorhergehenden Ansprüche 1 bis 8, ferner **dadurch gekennzeichnet, dass** die Keramik aus einem Material hergestellt ist, das aus der Gruppe ausgewählt ist, welche aus natürlichen Tonen, synthetischen Tonen, Tonerden, Zeolithen, Cordierit, Zircondioxid, Kieselerde und Gemischen davon besteht.

10. Keramischer Füllkörper (1) nach einem der vorhergehenden Ansprüche 4 bis 9, ferner **dadurch gekennzeichnet, dass** alle Trennwände (3) in dem Füllkörper (1) ein erstes und ein zweites Ende aufweisen, wobei die Trennwände (3) mit der im Wesentlichen zylindrischen Struktur mindestens an einer dem ersten Ende benachbarten Stelle verbunden sind.

11. Verfahren zum Abführen von Wärme von einem Fluidstrom, wobei das Verfahren **gekennzeichnet ist durch**:
Hindurchleiten des Fluidstroms **durch** mehrere keramische Füllkörper (1), wobei die Füllkörper (1) Wärme aus dem Fluidstrom aufnehmen, wobei jeder der Füllkörper (1) Folgendes aufweist:
eine im Wesentlichen zylindrische Struktur (2) mit einer Symmetrieachse in einer Richtung, welche die Länge (L) des Füllkörpers definiert, und einer zu der Länge senkrechten größten Abmessung (D), welche den Durchmesser des Füllkörpers definiert, wobei das Verhältnis des Durchmessers zur Länge im Bereich von 2,7 bis 4,5 liegt, wobei die im Wesentlichen zylindrische Struktur einen polygonalen Querschnitt mit sechs Seiten aufweist, wobei der Füllkörper mit mehreren inneren Trennwänden (3) versehen ist, die mehrere identische Durchlässe (4) **durch** den Füllkörper definieren, von denen jeder einen dreieckigen Querschnitt aufweist, wobei der keramische Füllkörper (1) ferner einen größeren axialen Durchlass (5) aufweist, der **durch** Kombinieren mehrerer der Durchlässe (4) vorgesehen ist, die von den Trennwänden erzeugt werden, welche die Symmetrieachse umgeben, wobei der größere axiale Durchlass (5) ein Volumen aufweist, welches mindestens doppelt so groß wie das der anderen Durchlässe (4) ist.

12. Verfahren zum Stoffaustausch, **gekennzeichnet durch**:
Hindurchleiten des Fluidstroms **durch** mehrere keramische Füllkörper (1), wobei die Füllkörper (1) eine oder mehrere Komponenten aus dem Fluidstrom absorbieren, wobei jeder der Füllkörper (1) Folgendes aufweist:
eine im Wesentlichen zylindrische Struktur (2) mit einer Symmetrieachse in einer Richtung, welche die Länge (L) des Füllkörpers definiert, und einer zu der Länge senkrechten größten Abmessung (D), welche den Durchmesser des Füllkörpers definiert, wobei das Verhältnis des Durchmessers zur Länge im Bereich von 2,7 bis 4,5 liegt, wobei die im Wesentlichen zylindrische Struktur einen polygonalen Querschnitt mit sechs Seiten aufweist, wobei der Füllkörper mit mehreren inneren Trennwänden (3) versehen ist, die mehrere identische Durchlässe (4) **durch** den Füllkörper definieren, von denen jeder einen dreieckigen Querschnitt aufweist, wobei der keramische Füllkörper (1) ferner einen größeren axialen Durchlass (5) aufweist, der **durch** Kombinieren mehrerer der Durchlässe (4) vorgesehen ist, die von den Trennwänden erzeugt werden, welche die Symmetrieachse umgeben, wobei der größere axiale Durchlass (5) ein Volumen aufweist, welches mindestens doppelt so groß wie das der anderen Durchlässe (4) ist.

13. Verfahren zum Stoffaustausch nach Anspruch 12, ferner **dadurch gekennzeichnet, dass** die Komponente Schwefeldioxid aufweist.

## Revendications

1. Elément de remplissage (1) en céramique pour applications de transfert de chaleur et de masse, **caractérisé par**
une structure (2) essentiellement cylindrique qui présente un axe de symétrie dans une direction qui définit la longueur (L) de l'élément et dont la plus grande dimension (D) perpendiculairement à la longueur définit le diamètre de l'élément,
le rapport entre le diamètre et la longueur étant de 2,7 à 4,5,
la structure essentiellement cylindrique présentant une section transversale polygonale dotée de six côtés,
l'élément étant doté de plusieurs septums internes (3) qui définissent plusieurs passages identiques (4) qui traversent l'élément, chacun de section transversale triangulaire,
l'élément de remplissage (1) en céramique comprenant en outre un passage axial (5) plus grand obtenu en combinant plusieurs des passages (4) créés par les septums qui entourent l'axe de symétrie,
le volume du passage axial (5) plus grand étant au moins le double de celui des autres passages (4).

2. Elément de remplissage (1) en céramique selon la revendication 1, **caractérisé en outre en ce que** le rapport entre le diamètre et la longueur est compris entre 3,0 et 4,4.

3. Elément de remplissage (1) en céramique selon la revendication 1, **caractérisé en outre en ce que** le rapport entre le diamètre et la longueur est compris entre 3,5 et 4,0.

4. Elément de remplissage (1) en céramique selon l'une quelconque des revendications 1 à 3 qui précèdent, **caractérisé en outre en ce que** la structure cylindrique enferme plusieurs septums (3) qui définissent plusieurs passages (4) à travers l'élément et qui présentent tous essentiellement la même longueur.

5. Elément de remplissage (1) en céramique selon la revendication 4, **caractérisé en outre en ce qu'**il présente au moins vingt passages (4).

6. Elément de remplissage (1) en céramique selon la revendication 5, **caractérisé en outre en ce qu'**il présente au moins cinquante passages (4).

7. Elément de remplissage (1) en céramique selon l'une quelconque des revendications 4 à 7 qui précèdent, **caractérisé en outre en ce que** plusieurs septums (3) coupent au moins deux autres septums (3) en des emplacements situés à distance l'un de l'autre suivant la longueur des septums (3).

8. Elément de remplissage (1) en céramique selon la revendication 1, **caractérisé en outre en ce que** le volume du passage axial (5) plus grand représente au moins quatre fois celui des autres passages (4).

9. Elément de remplissage (1) en céramique selon l'une quelconque des revendications 1 à 8 qui précèdent, **caractérisé en outre en ce que** la céramique est constituée d'un matériau sélectionné dans l'ensemble constitué des argiles naturelles, des argiles synthétiques, des alumines, des zéolithes, de la cordiérite, de la zirconie, de la silice et de leurs mélanges.

10. Elément de remplissage (1) en céramique selon l'une quelconque des revendications 4 à 9 qui précèdent, **caractérisé en outre en ce que** tous les septums (3) de l'élément de remplissage (1) présentent une première et une deuxième extrémité, les septums (3) étant reliés à la structure essentiellement cylindrique en position adjacente à au moins la première extrémité.

11. Procédé d'extraction de chaleur d'un écoulement de fluide, le procédé étant **caractérisé par** l'étape qui consiste à :
faire s'écouler l'écoulement de fluide dans plusieurs éléments de remplissage (1) en céramique, les éléments de remplissage (1) absorbant la chaleur de l'écoulement de fluide et chacun des éléments de remplissage (1) comprenant :
une structure (2) essentiellement cylindrique qui présente un axe de symétrie dans une direction qui définit la longueur (L) de l'élément et dont la plus grande dimension (D) perpendiculairement à la longueur définit le diamètre de l'élément,
le rapport entre le diamètre et la longueur étant de 2,7 à 4,5,
la structure essentiellement cylindrique présentant une section transversale polygonale dotée de six côtés,
l'élément étant doté de plusieurs septums internes (3) qui définissent plusieurs passages identiques (4) qui traversent l'élément, chacun de section transversale triangulaire,
l'élément de remplissage (1) en céramique comprenant en outre un passage axial (5) plus grand obtenu en combinant plusieurs des passages (4) créés par les septums qui entourent l'axe de symétrie,
le volume du passage axial (5) plus grand étant au moins le double de celui des autres passages (4).

12. Procédé de transfert de masse, **caractérisé par** l'étape qui consiste à :
faire s'écouler l'écoulement de fluide dans plusieurs éléments de remplissage (1) en céramique, les éléments de remplissage (1) absorbant un ou plusieurs composants de l'écoulement de fluide, chacun des éléments de remplissage (1) comprenant :
une structure (2) essentiellement cylindrique qui présente un axe de symétrie dans une direction qui définit la longueur (L) de l'élément et dont la plus grande dimension (D) perpendiculairement à la longueur définit le diamètre de l'élément,
le rapport entre le diamètre et la longueur étant de 2,7 à 4,5,
la structure essentiellement cylindrique présentant une section transversale polygonale dotée de six côtés,
l'élément étant doté de plusieurs septums internes (3) qui définissent plusieurs passages identiques (4) qui traversent l'élément, chacun de section transversale triangulaire,
l'élément de remplissage (1) en céramique comprenant en outre un passage axial (5) plus grand obtenu en combinant plusieurs des passages (4) créés par les septums qui entourent l'axe de symétrie,
le volume du passage axial (5) plus grand étant au moins le double de celui des autres passages (4).

13. Procédé de transfert de masse selon la revendication 12, **caractérisé en outre en ce que** le composant contient du dioxyde de soufre.
